# EUROPEAN PATENT APPLICATION

(11) **EP 1 251 692 A2**
(43) Date of publication of application: **23.10.2002**
(21) Application number: 02252711.3
(22) Date of filing: 17.04.2002
(51) Int. Cl.: H04N 5/275

(54) **Improvements in electronic image keying systems**

(30) Priority: 18.04.2001 GB 0109570
(71) Applicant: Quantel Limited, Newbury, Berkshire RG14 2NX (GB)
(72) Inventor: Hinson, Roy Neil, Newbury, Berkshire RG20 4UB (GB); Searby, Anthony David, Newbury, Berkshire RG20 9PS (GB); Throup, David, Lockeridge, Wiltshire SN8 4ED (GB)
(74) Representative: Cross, James Peter Archibald

(57) **Abstract**

A chroma keying system 1 processes foreground image data representing a foreground subject in front of a matte, together with background data representing a background image, to produce composite image data representing the foreground subject and the background in place of the matte. A programmable look up table 8 is provided for receiving on a pixel-by-pixel basis the most significant bits (MSBs) of the foreground image data and outputting in response thereto range data representing limits of a keying range. An interpolator 9 is also provided for interpolating the range data depending on the least significant bits (LSBs) of the foreground image data and outputting keying data. A combiner 4 combines the foreground image data and the background image data on a pixel-by-pixel basis in response to the keying data to produce the composite image data. The system is operable in a calibration mode in which a generator 15 is connected to input the colour point data to an external keyer. The generator 15 generates colour point data representing all possible colours that could be represented by the most significant bits of the foreground image data, causing the external keyer to output keying data. The look up table 8 is also connected to the external keyer in this mode so that it can receive and store the keying data for subsequent use in the processing of foreground image data together with background image data to produce composite image data.

## Description

The invention relates to electronic image keying systems and, in particular, but not exclusively, to keying systems in which a key is used to control the combining of sets of data representing different pictures to produce a composite picture.

In an electronic picture composition system such as the system described in our British Patent No 2 113 950 and corresponding US Patent No 4 602 286, the teachings of which are incorporated herein by reference, data relating to two independent pictures, termed herein as foreground and background pictures respectively, are stored in a memory. Data representing a further image, termed a control image or stencil, is also stored in a memory and is used in the control of the combining of the data representing the foreground and background pictures to produce data representing a composite picture. The control image may be created in several different ways including the user "painting" the image as described in our British Patent No 2 089 625 and corresponding US Patent No 4 514 818, the teachings of which are also incorporated herein by reference. Another way in which the control image can be created is by defining a colour in the foreground image and at points where that colour occurs creating corresponding control image points in the control image store.

This latter approach is similar to the technique of chroma keying used to control the combining of video signals representing different pictures to produce a composite video picture. Chroma keying systems are frequently used to add background scenery to a video of actors performing in front of a blank backdrop or for adding an illustration behind a programme presenter or introducing news footage behind a newsreader.

Chroma keying systems generally comprise at least two input channels for receiving respective video signals representing a foreground picture and a background picture, and a switch for selectively switching the two input channels to an output channel. The input foreground picture usually comprises the foreground subject (actors, newsreaders, etc) set against a uniform background of a saturated colour (typically blue although other colours such as green and magenta are also used) at a predetermined level of luminance. The switch responds to the presence of the predetermined level of saturated colour (e.g. blue) in the foreground signal. When there is no saturated blue in the foreground signal, i.e. the signal represents the actor or newsreader, the switch connects the foreground channel with the output channel, and when saturated blue is present in the foreground signal the switch connects the background channel with the output channel. Thus, the switch operates in response to the saturated blue signal, generally referred to as a chroma key signal, to switch a foreground image into a background image.

One problem with this type of system is that the chroma key signal, which is intended to be of uniform chrominance (U,V), is likely to vary and the keying of the foreground and background signals may then become unsatisfactory. Such variations in the chroma key signal may be caused for example by uneven lighting in the television studio during recording of the foreground or it may be caused by noise in the foreground signal.

In our European patent application published as EP-A-0 171 829, we disclose a system which addresses this problem by making the keying switch responsive to a user defined range of values of blue. The system is arranged so that the user can identify in one frame of the foreground image an area thereof. The maximum and minimum values of blue in the identified area are detected by the system and used to identify a range of chrominance keying values. Once the range has been defined, the switch will connect the background channel to the output channel whenever a chrominance value within the range is detected in the foreground signal.

Other, more sophisticated chroma keying systems ("keyers") are available from such companies as Ultimatte and Primatte. These keyers use proprietary software running on a general purpose computer or a combination of software and hardware to implement advanced algorithms that key a foreground image and a background image together. The use of advanced algorithms enables very accurate keying to be achieved, producing a very convincing composite picture. One limitation of such keyers, however, is their speed. It is not possible, using presently available technology, to key high definition images at anything approaching real-time. In this context, real-time is determined by the frame rate of the video - real-time keying requires the keying of one composite frame to be completed in less than a frame period (e.g. less than 1/25 second for the PAL standard and less than 1/30 second for the NTSC standard). Typically, the processing of a composite takes a few seconds to complete.

The present invention aims to provide an improved video keying system in which keying operations performed by an external keyer are approximated, without having to know the functions actually used by the keyer in its operation, using dedicated hardware to enable the keying of high definition images to be effected in real-time.

According to one aspect of the invention, therefore, there is provided a chroma keying system for processing foreground image data representing a foreground subject in front of a matte together with background data representing a background image to produce composite image data representing the foreground subject and the background in place of the matte, the image data representing pixels each defined by multiple bits of which some are most significant bits and others are least significant bits, the system comprising: a programmable look up table for receiving on a pixel-by-pixel basis the most significant bits of the foreground image data and outputting in response thereto range data representing limits of a keying range; an interpolator for interpolating the range data depending on the least significant bits of the foreground image data and outputting keying data; a combiner for combining the foreground image data and the background image data on a pixel by pixel basis in response to the keying data to produce the composite image data; and a generator for generating colour point data representing all possible colours that could be represented by the most significant bits of the foreground image data; and wherein the system is operable in a calibration mode in which the generator is connected to input the colour point data to an external keyer to cause the same to output keying data, and the look up table is connected to the external keyer to receive and store the keying data for subsequent use in the processing of foreground image data together with background image data to produce composite image data.
According to another aspect of the invention there is provided a chroma keying method in which foreground image data representing a foreground subject in front of a matte is processed together with background data representing a background image to produce composite image data representing the foreground subject and the background in place of the matte, the image data representing pixels each defined by multiple bits of which some are most significant bits and others are least significant bits, the method comprising: inputting on a pixel-by-pixel basis the most significant bits of the foreground image data a programmable look up table and receiving range data representing limits of a keying range output by the programmable look up table; interpolating the range data depending on the least significant bits of the foreground image data and outputting keying data; combining the foreground image data and the background image data on a pixel by pixel basis in response to the keying data to produce the composite image data; and wherein the method includes calibrating the look up table by generating colour point data representing all possible colours that could be represented by the most significant bits of the foreground image data; inputting the colour point data to an external keyer to cause the same to output keying data, connecting the look up table to the external keyer, and receiving and storing the keying data in the look up table for subsequent use in the processing of foreground image data together with background image data to produce composite image data.
The invention also provides a chroma keying apparatus in which a foreground image comprising a foreground subject in front of a matte is analysed on a pixel by pixel basis to generate keying data that distinguishes the foreground subject and the matte and which is used to insert the foreground subject in a background image, the foreground data being analysed by a colour cube comprising a look up table, the keyer being operable in a learning mode in which data representing selected colour values is input to an external keyer so as to cause the external keyer to output keying data which is store in the look up table for subsequent use in analysing the foreground image.

The above and further features of the invention are set forth with particularity in the appended claims and together with advantages thereof will become clearer from consideration of the following detailed description of an exemplary embodiment of the invention given with reference to the accompanying drawings.

In the drawings:
Figure 1 is a schematic block diagram of a keying system for keying a background image and a background image;
Figure 2 is a schematic block diagram of a colour cube used in the system of Figure 1;
Figure 3 is a graphical representation of a volume defined by coordinates in colour space; and
Figure 4 is a graphical representation of a volume in colour space defining the colour of a chroma key.

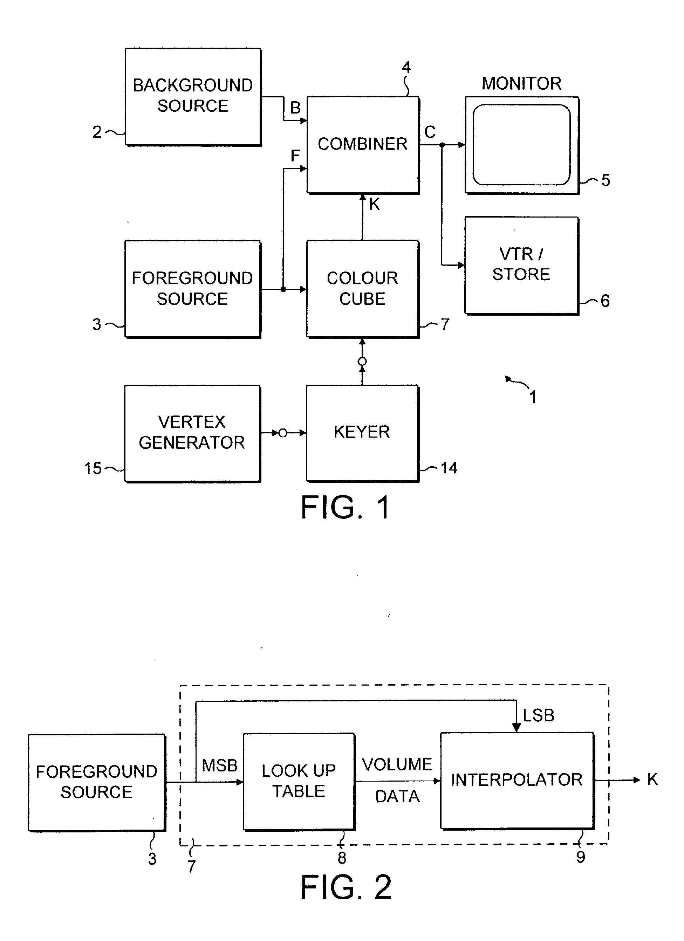

Turning now to Figure 1 of the accompanying drawings, there is shown a keying system 1 comprising a background video source 2 and a foreground video source 3. The video sources 2, 3 may be any suitable video source, for example a video camera, a video tape recorder (VTR) or a hard disk store. The background video source 2 is connected to supply video data representing a background (B) to a combiner 4. The foreground video source 3 is similarly connected to supply video data representing a foreground (F) to the combiner 4.

The combiner 4 is arranged to combine the background data (B) and the foreground data (F) depending on keying data (k) generated in a manner to be described herein below. The combiner combines the foreground data and the background data to produce composite image data (C) on a pixel-by-pixel basis in accordance with equation: C = kB + (1-k)F. Thus, for a pixel where the keying data (k) has a value of 0 (zero) the composite image data (C) output from the combiner 4 comprises data representing the foreground image (F), where k has a value of 1 (one) the composite image data (C) output from the combiner 4 comprises data representing the background image (B), and where k has a value between zero and one (0 ≤ k ≤ 1) the composite image data (C) output from the combiner 4 comprises data representing information from both the foreground image and the background image. The composite image data from the combiner may be output to a monitor 5 for display of the image thereon and review of the same by a user of the system. The composite data may also or instead be output for storage in a bulk storage device 6, such as a video tape recorder (VTR) or a hard disk store, or may be output directly to broadcast equipment (not shown) for transmission.

The foreground video source 3 is also connected to supply video data representing the foreground (F) to a so-called colour cube 7. Colour cubes are commonly used to convert image data from one colour format to another colour format. For example, a colour cube may be configured to convert from the red, green and blue (RGB) component format used in many computers to the cyan, magenta and yellow (CMY) format used in printing.

In the system 1 shown in Figure 1 the colour cube 7 is connected to receive data from the foreground video source 3 and to convert the picture data into the keying data (k) used by the combiner. The colour cube 7 responds to pixels representing the matte colour (typically saturated blue) by outputting values of k = 1. Pixels comprising the foreground subject cause the colour cube to output values of k = 0. Pixels having colour values close to but not equal to the colour value of the matte are assigned values of k between 0 and 1, i.e. 0 < k < 1. Thus, for example, pixels at the boundary between the foreground subject and the matte may not solely represent either the matte or the foreground subject and thus may have colour values close to the blue value of the matte. In this case, the colour cube outputs values of k between 0 and 1, depending on exactly how close the pixel value is to the blue value of the matte.

Because of this, the final composite picture may include areas (as small as a single pixel) containing components corresponding to the blue of the matte. A sophisticated chroma keying system will aim to minimise this effect in the way it deals with colour values approaching that of the matte.

Elements of the colour cube 7 are shown in greater detail in Figure 2 of the accompanying drawings. In the following, for the purpose of explanation, it will be assumed that the foreground data (F) is in the RGB format. It will of course be appreciated that the data need not be in this format and could be in a different format entirely. Indeed in a television system the data would probably define the pixels in terms of luminance (Y) and chrominance (U, V) values.

Foreground data (F) from the foreground source 3 is input to a look up table 8 and an interpolator 9, which together comprise the colour cube 7. The look up table 8 may be implemented in any suitably sized random access memory device (RAM). The interpolator may be formed using standard dedicated circuitry or using suitable programmable devices, both of which are widely available.

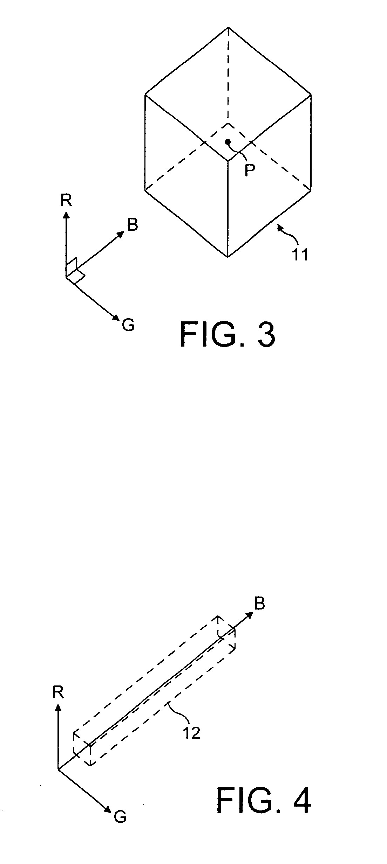

The most significant bits (MSB) of each pixel of the foreground data (F) are input to the look up table 8. As shown in Figure 3, the MSBs of the data are only able to define a volume 10 in colour space containing (typically centred on) the colour point P, i.e. the colour value, of the pixel. In a three-dimensional colour system (e.g. RGB) the volume will be a cuboid 11, as shown in Figure 3 of the accompanying drawings.

The size of the cuboid 11 in relation to the size of the colour point P depends on the number of bits comprising the MSBs input to the look up table 8. A larger number of bits will result in a smaller cuboid. That is to say the range of colours bounded by the cuboid will be a closer approximation to the colour at the point P. However, the use of more MSBs will necessitate the use of a larger look up table with a consequent, and undesirable, increase in cost. Fewer bits increases the size of the cuboid in relation to that of the point P and thus reduces the accuracy of the colour representation, but also reduces the size and cost requirements of the look up table 8.

When a colour cube of the kind shown in Figure 2 is used to convert data from one format to another the look up table is usually so arranged that the volume defined by the MSBs is rotated and translated in colour space from the axes of the original format (e.g. RGB) to the axes of the new format (e.g. CMY). Data defining the corners of the cuboid in the new format is input to the interpolator together with the LSBs of the data from the foreground source. The interpolator uses the LSBs from the source to interpolate between the corners of the cuboid as defined by the data from the look up table. The output from the interpolator represents the colour value of the pixel in the new format.

Although the principles of operation of the colour cube 7 in the system 1 is the same as that described in the preceding paragraph, the colour cube 7 is not used to convert from one colour format to another. Instead, the colour cube 7 is used by the system 1 to define the keying data (k) used by the combiner 4 in the keying of the foreground image data (F) and the background image data (B). In the system 1 the data output from the look up table 8 defines a range from k⁻ to k⁺ in the keying dimension k. The limits k⁺ and k⁻ are simply the upper and lower limits of the range. The interpolator 7 interpolates the data output from the look up table to arrive at an exact value for the keying data (k). That value (k) is output from the colour cube to the combiner 4.

The manner in which the colour cube 7 operates to generate the keying data k from the RGB foreground data may be better understood from consideration of Figure 4 of the accompanying drawings. The look up table 8 contains data arranged such that values of k⁺ and k⁻ greater than 0 (zero) are only output for colour values equal to or approximately equal to the value of the matte (e.g. saturated blue). Other colour values result in values of k⁺ and k⁻ equal to 0 being output. Thus, the colour cube 7 will only output values of k > 0 for a small range of colour values.

Further information regarding colour cubes is contained in our British patent number 2,275,584 and corresponding US patent number 5,568,596, the teachings of which are incorporated herein by reference. Indeed, the colour cube plus rotator disclosed therein may be used in the system 1 in place of the colour cube 7.

An example of the behaviour of the colour cube 7 is illustrated in Figure 4 of the accompanying drawings, in which a volume 12 in RGB colour space corresponds to colour values equal to or approximately equal to the colour of the matte. For pixels having a colour within the volume 12 the value of k will typically be greater than 0 (zero) up to 1 (one) and for colours outside the volume 12 the values of k will typically be equal to 0.

The system so far described is able under many circumstances convincingly to key the subject of a foreground image over a background by identifying elements in the foreground image corresponding to the matte and generating keying data therefrom. There are however situations where the keying will be less convincing, for example where the colour of a pixel that should relate to the matte (i.e. the colour should be inside the volume 12 of Figure 4) is actually defined as relating to the foreground subject (i.e. it is outside the volume 12) or vice versa. More sophisticated definitions than that described are required in order to overcome this problem.

Sophisticated keyers are able to create definitions of volumes in colour space using complex equations. For example, instead of simply defining a volume as a cuboid, the keyer may define the volume as a main spheroid or set of spheroids. The definition may include nodules added to or removed from the surface of the spheroid and sub-volumes removed from the main volume of the spheroid. These additions and subtractions allow the definition to accommodate small volumes of colour that should be excluded from or added to the definition of what constitutes the chroma key colour. Other shapes, such as sets of pyramid-like volumes, can also be defined. Generally, the shapes are defined by the keyer by way of complex equations generated automatically and through interaction with the used.

A limitation with such sophisticated definitions is that they take a long time to calculate. With the large number of pixels that are present in a high definition video image (and indeed images of even greater definition) it is not possible to process all the pixels in an image frame in a frame period. Thus, real-time processing is not possible.

As shown in Figure 1, the system further comprises a keyer 14 removably connected to receive data from a vertex generator 15 and to output data to the colour cube 7. Although not shown in Figure 1, the output from the keyer 14 is in fact input to the look up table 8 of the colour cube 7, as illustrated in Figure 2 of the accompanying drawings. The keyer 14 may be any commercially available keyer that performs more sophisticated keying operations than that described herein with reference to Figure 2. For example, the keyer 14 may be a keyer produced by Ultimatte or Primatte. The keyer could also be a custom device built to perform a specific keying operation in software, hardware or a combination of the two. Since the keyer 14 is removable, the exact form of the keyer is not important as long as it can perform a desired keying function.

The system 1 shown in Figure 1 of the accompanying drawings overcomes the above discussed limitations by analysing what the keyer 14 does to selected colour points in colour space. The selected points correspond to the colour points that can be defined by the MSBs output from the foreground source 3, as shown in Figure 2. Put another way, the points defined by the MSBs are points of colour correspond to every possible position in colour space of the corners of the cuboid 11 illustrated in Figure 3 of the accompanying drawings. The system is arranged to store data representing that behaviour in the look up table 8 of the colour cube 7.

Thus in a calibration or learning mode of the system 1, the vertex generator 15 generates colour values for pixels at positions in colour space corresponding to points that can be defined by the MSBs from the foreground source 3. The colour point data is input to the keyer 14 where it is processed. The keyer 14 outputs a respective keying value for each colour point input by the vertex generator 15. In this way, the system 1 analyses how the keyer 14 reacts to various colours in colour space without any reference to the complex operations actually performed by the keyer 14. The keying values output for each point are input to the look up table 8 where they are stored. Once all the values for all vertex points have been stored in the look up table 8, the keyer can be removed because it is not needed in the normal, processing mode of operation of the system 1.

Thereafter, when the system is operating in a processing mode, inputting the MSBs of the foreground image data to the look up table 8 results in the look up table outputting the keying values k⁺ and k⁻ as previously. Here, though, the values k⁺ and k⁻ represent a range of values including the value that would have bee output from the keyer if the keyer had been presented with all the bits of the foreground image data (i.e. not just the MSBs). The values of k⁺ and k⁻ are input to the interpolator 9 where they are processed. A value of k is output from the interpolator 9. The output value of k is approximately equal to the value of k that would have been output from the keyer 14 had the keyer received all the bits of data from the foreground source 3. The operation of the system is however considerably faster than that of the keyer because, unlike the keyer, the system does not have to perform complex operations on the incoming data in order to arrive at a value for k. Instead, for each pixel, the system looks up a value in the look up table and interpolates between values output from the look up table to arrive at the value for k.

Thus, the system 1 is able to approximate the operations of a sophisticated keyer without having knowledge of the functions actually used by the keyer in its operation. The use of dedicated hardware as shown in Figures 1 and 2 enables high speed processing of the image data from the foreground source 3. Sophisticated real time chroma keying of high definition images is therefore possible using the system 1.

Having thus described the invention by reference to a preferred embodiment it is to be well understood that the embodiment in question is exemplary only and that modifications and variations such as will occur to those possessed of appropriate knowledge and skills may be made without departure from the spirit and scope of the invention as set forth in the appended claims and equivalents thereof.

## Claims

1. A chroma keying system for processing foreground image data representing a foreground subject in front of a matte together with background data representing a background image to produce composite image data representing the foreground subject and the background in place of the matte, the image data representing pixels each defined by multiple bits of which some are most significant bits and others are least significant bits, the system comprising:
a programmable look up table for receiving on a pixel-by-pixel basis the most significant bits of the foreground image data and outputting in response thereto range data representing limits of a keying range;
an interpolator for interpolating the range data depending on the least significant bits of the foreground image data and outputting keying data;
a combiner for combining the foreground image data and the background image data on a pixel by pixel basis in response to the keying data to produce the composite image data; and
a generator for generating colour point data representing all possible colours that could be represented by the most significant bits of the foreground image data; and wherein
the system is operable in a calibration mode in which the generator is connected to input the colour point data to an external keyer to cause the same to output keying data, and the look up table is connected to the external keyer to receive and store the keying data for subsequent use in the processing of foreground image data together with background image data to produce composite image data.

2. A chroma keying method in which foreground image data representing a foreground subject in front of a matte is processed together with background data representing a background image to produce composite image data representing the foreground subject and the background in place of the matte, the image data representing pixels each defined by multiple bits of which some are most significant bits and others are least significant bits, the method comprising:
inputting on a pixel-by-pixel basis the most significant bits of the foreground image data a programmable look up table and receiving range data representing limits of a keying range output by the programmable look up table;
interpolating the range data depending on the least significant bits of the foreground image data and outputting keying data;
combining the foreground image data and the background image data on a pixel by pixel basis in response to the keying data to produce the composite image data; and wherein
the method includes calibrating the look up table by generating colour point data representing all possible colours that could be represented by the most significant bits of the foreground image data; inputting the colour point data to an external keyer to cause the same to output keying data, connecting the look up table to the external keyer, and receiving and storing the keying data in the look up table for subsequent use in the processing of foreground image data together with background image data to produce composite image data.

3. A chroma keying apparatus in which a foreground image comprising a foreground subject in front of a matte is analysed on a pixel by pixel basis to generate keying data that distinguishes the foreground subject and the matte and which is used to insert the foreground subject in a background image, the foreground data being analysed by a colour cube comprising a look up table, the keyer being operable in a learning mode in which data representing selected colour values is input to an external keyer so as to cause the external keyer to output keying data which is store in the look up table for subsequent use in analysing the foreground image.
